**Europäisches Patentamt**

**European Patent Office**

**Office européen des brevets**

(11) Veröffentlichungsnummer: **0 049 390**

**A2**

## EUROPÄISCHE PATENTANMELDUNG

(21) Anmeldenummer: **81107304.8**

(22) Anmeldetag: **16.09.81**

(51) Int. Cl.³: **B 29 F 1/12**

(30) Priorität: **02.10.80 DE 3037252**

(43) Veröffentlichungstag der Anmeldung:
**14.04.82 Patentblatt 82/15**

(84) Benannte Vertragsstaaten:
**AT BE CH FR GB IT LI LU NL SE**

(71) Anmelder: **Firma Wilhelm Rogg**
**Kunststoff-Metallisierung**
**Fuldaerstrasse 11**
**D-8500 Nürnberg(DE)**

(72) Erfinder: **Neumeister, Ernst**
**Saidelsteig 3**
**D-8520 Erlangen(DE)**

(74) Vertreter: **Böhme, Volker, Dr. et al,**
**Patentanwälte Dr. Böhme, Kessel, Böhme**
**Frauentorgraben 73**
**D-8500 Nürnberg(DE)**

(54) **Spritzgussform zur Herstellung von Formkörpern aus zwei Kunststoffarten.**

(57) Bei einer Spritzgußform zur Herstellung von Formkörpern aus zwei Kunststoffarten sind an einen Formhohlraum zwei Spritzeinheiten (4, 6) angeschlossen und füllt ein verschiebbarer Kern (15) in einer absperrenden Stellung einen Bereich des Formhohlraumes aus und trennt einen ersten, der ersten Spritzeinheit zugeordneten Formhohlraumbereich sowie die Zutrittsöffnung der ersten Spritzeinheit (6) in den Formhohlraum von einem zweiten, mit der zweiten Spritzeinheit (4) verbundenen Formhohlraumbereich ab, wobei zuerst der zweite Formhohlraumbereich aus der zweiten Spritzeinheit und dann nach Rückzug des Kernes (15) der diesem zugeordnete Bereich des Formhohlraumes und der erste Formhohlraumbereich aus der ersten Spritzeinheit gefüllt wird und der Kern eine Ausnehmung (37) bildet. Es ist erwünscht, daß zwei oder mehr kompliziert gestaltete Formbereiche mit verschiedenen Kunststoffarten gefüllt werden können und dennoch ein zusammenhängendes Spritzteil entsteht. Dies ist erreicht, wenn die Ausnehmung (37) in dem sperrenden Bereich des Kernes (15) vorgesehen ist und bei absperrender Stellung mit dem zweiten Formhohlraumbereich in Verbindung steht und die Zutrittsöffnung der ersten Spritzeinheit (6) in den Formhohlraum bei dem absperrenden Kern (15) liegt. Dabei halten die in den beiden Formhohlraumbereichen nacheinander gespritzten Teile an der Stoßstelle ausreichend fest zu einem Gesamt-Formteil bzw. Formkörper zusammen.

*Fig. 1*

Anmelderin:    Firma Wilhelm Rogg Kunststoff-Metallisierung

Titel:    Spritzgußform zur Herstellung von Formkörpern aus zwei Kunststoffarten

## Beschreibung

Die Erfindung betrifft eine Spritzgußform zur Herstellung von Formkörpern aus mindestens zwei Kunststoffarten, bei der an einen Formhohlraum zwei Spritzeinheiten angeschlossen sind und ein hin- und herverschiebarer
Kern in einer absperrenden Stellung einen Bereich des
Formhohlraumes ausfüllt und einen ersten, der ersten
Spritzeinheit zugeordneten Formhohlraumbereich sowie
die Zutrittsöffnung der ersten Spritzeinheit in den
Formhohlraum von einem zweiten, mit der zweiten Spritzeinheit verbundenen Formhohlraumbereich abtrennt, wobei zuerst der zweite Formhohlraumbereich aus der zweiten Spritzeinheit und dann nach Rückzug des Kernes der
diesem zugeordnete Bereich des Formhohlraumes und der erste Formhohlraumbereich aus der ersten Spritzeinheit geführt wird und der Kern eine Ausnehmung bildet.

Eine bekannte (DE-PS 885 152) Spritzgußform dient nur dazu, zwei Platten oder Schichten aus den verschiedenen Kunststoffarten aneinanderzuspritzen. Hierzu füllt ein großer bzw. ausladender Kern einen beachtlichen Teil des Formhohlraumes in der einen Stellung aus. Wenn der Kern zurückgezogen ist, dann wird der vom Kern freigegebene Bereich über die erste, zuerst vom Kern abgesperrte Zutrittsöffnung mit Kunststoff ausgefüllt. Bei dieser Spritzgußform wird Fassonraum mit Kern ausgefüllt und nach dessen Rückzug direkt an das Fassonteil angespritzt. Es ist nicht möglich, einen kompliziert gestalteten Formbereich anschließend an einen anderen komplizierten Formbereich mit einer zweiten Kunststoffart zu füllen.

Eine Aufgabe der Erfindung ist es daher, eine Spritzgußform der eingangs genannten Art zu schaffen, bei der zwei oder auch mehr kompliziert gestaltete Formbereiche mit verschiedenen Kunststoffarten gefüllt werden können und dennoch ein zusammenhängendes Spritzteil entsteht bzw. bei der die Gestalt des nachträglich angespritzten Formkörperteiles unabhängig von der Gestalt des Kernes ist, wobei die in den beiden Formhohlraumbereichen nacheinander gespritzten Teile an der Stoßstelle ausreichend fest zu einem Gesamt-Formteil bzw. Formkörper zusammenhalten sollen. Die erfindungsgemäße Spritzgußform ist,

0049390

- 3 -

diese Aufgabe lösend, dadurch gekennzeichnet, daß die Ausnehmung in dem sperrenden Bereich des Kernes vorgesehen ist und bei absperrender Stellung mit dem zweiten Formhohlraumbereich in Verbindung steht und die Zutrittsöffnung der ersten Spritzeinheit in den Formhohlraum bei dem absperrenden Kern liegt.

Bei der erfindungsgemäßen Spritzgußform wird, wie bisher, der zweite Formhohlraumbereich bei in Schließstellung befindlichem Kern mittels der zweiten Spritzeinheit gefüllt. Nachdem der Kern zurückgezogen ist, ist nicht nur der zuvor vom Kern ausgefüllte Bereich sondern auch der vom Kern zuvor abgesperrte Bereich des Formhohlraumes noch offen und leer und steht zur Füllung aus der zweiten Spritzeinheit zur Verfügung Die Gestalt des ersten bzw. zunächst abgesperrten Formhohlraumbereiches kann völlig unabhängig von der Gestalt des Kernes, d.h. beliebig kompliziert ausgebildet sein. Es ist somit möglich, einen Formkörper mit beliebig komplizierten Formkörperteilen aus verschiedenen Kunststoffarten zu spritzen.

Das Aneinanderspritzen von Kunststoff ist insofern problematisch, als der fertige Formkörper ausreichend fest zusammenhalten soll. Unter Umständen halten zwei flächig aneinandergespritzte Kunststoffarten nicht ausreichend fest aneinander. Da gemäß Erfindung zwei verschiedene Kunststoffarten aneinandergespritzt werden, liegt ein besonderer Gesichtspunkt der Erfindung darin, unter wel-

- 4 -

chen Bedingungen die aneinandergespritzten Kunststoffbereiche ausreichend fest aneinander halten. Die Ausnehmung bzw. Ausbuchtung wird nämlich bereits mit Kunststoff angefüllt, wenn in den zweiten Formhohlraumbereich gespritzt wird. Der sich in der Ausnehmung bildende "Ansatz" wird beim Spritzen mittels der ersten Spritzeinheit ummantelt bzw. eingespritzt, wodurch eine besonders innige, hintergreifende Verbindung der beiden Kunststoffarten gegeben ist.

Besonders zweckmäßig und vorteilhaft ist es, wenn der Kern in der absperrenden Stellung einen Kanal, der zwei ausladende Formhohlraumbereiche miteinander verbindet, unterbricht. Spritzgußformen, bei denen ausladende Formhohlraumbereiche durch einen Kanal und Stichkanäle miteinander verbunden sind, sind an sich bekannt. Sie dienen z.B. der Herstellung von Tasten, die durch ein Gitterwerk miteinander verbunden sind, wobei in den ausladenden Formhohlraumbereichen die Tasten und in den Kanälen und Stichkanälen das Gitterwerk entsteht. Gemäß Erfindung wird nur während des Spritzens mit der zweiten Spritzeinheit ein ausladender Formhohlraumbereich samt anschließendem Kanalstück und Stichkanal mittels des Kernes abgetrennt, um nach Rückzug des Kernes mittels der ersten Spritzeinheit mit einer ersten Kunststoffart gefüllt zu werden.

Bei einer Ausführungsform sind an einen Kanal außer anderen ausladenden Formhohlraumbereichen auch zwei zusätzliche Formhohlraumbereiche angeschlossen. Der Abschnitt des Kanales, von dem die beiden zusätzlichen Stichkanäle abzweigen, ist vom übrigen Kanal mittels zweier Kerne abtrennbar und an die erste Spritzeinheit angeschlossen. Auch hier ist die Zutrittsöffnung der ersten Spritzeinheit in den Formhohlraum, hier in den Kanal, durch die Kerne so abgesondert, daß sie nicht von dem Kunststoff der ersten Spritzeinheit aufgefüllt bzw. verlegt werden kann.

Bevorzugt ist es, wenn der Kern in der absperrenden Stellung die Zutrittsöffnung der ersten Spritzeinheit in den Formhohlraum überdeckt. Es ist bei dieser Ausbildung nicht notwendig, nur deshalb zwei Kerne vorzusehen, um die erste Zutrittsöffnung gegen den Kunststoff der zweiten Spritzeinheit abzuschirmen. Die Kombination der Überdeckung der ersten Zutrittsöffnung mit der Unterbrechung des Kernes ist bevorzugt, weil dann ein einziger Kern zwei Funktionen erfüllt.

Besonders zweckmäßig und vorteilhaft ist es auch, wenn der Kern in der absperrenden Stellung einen Gitterwerk-Stichkanal, der zu einem ausladenden Formhohlraumbereich führt, abdeckt. Bei dieser Ausführungsform erfüllt der Kern die Aufgabe, direkt die Zutrittsöffnung zu dem ersten ausladenden Formhohlraumbereich abzudecken. Diese

0049390

Gestaltung ist besonders bevorzugt in Kombination damit, daß der Kern einen Kanal unterteilt und die Zutrittsöffnung von der ersten Spritzeinheit abdeckt.

Es ist an sich möglich, den Kern in Linie mit der Einspritzrichtung an der Zutrittsöffnung der ersten Spritzeinheit zu verschieben. Besonders zweckmäßig und vorteilhaft ist es jedoch, wenn die Richtung der Hin- und Herverschiebung des Kernes quer zur Einspritzrichtung der ersten Spritzeinheit verläuft. Diese Verschieberichtung des Kernes ermöglicht besonders komplizierte Gestaltungen des Formhohlraumes, vereinfacht das Ineinandergreifen aneinandergrenzender Kunststoffarten und vereinfacht den Bau der gesamten Spritzgußform. Die Spritzgußform besteht in der Regel aus zwei Werkzeugteilen, die gegeneinander bewegbar sind, wobei die Einspritzrichtung rechtwinkelig zur Verschieberichtung der Werkzeugteile verläuft. Es vereinfacht die Verschiebeeinrichtung des Kernes, wenn dessen Verschieberichtung mit der der Werkzeugteile zusammenfällt.

Besonders zweckmäßig und vorteilhaft ist es weiterhin, wenn der Kern in einen, gegenüber einem hin- und herverschiebbaren Werkzeugteil feststehenden Werkzeugteil angeordnet ist. Diese Ausbildung vereinfacht die Steuerung der Bewegung des Kernes.

Eine besonders zweckmäßige und vorteilhafte Ausführungsform der Erfindung liegt vor, wenn der absperrende verschiebbare Kern vorgesehen ist in Kombination mit einer Transporteinrichtung zum Verbringen von teilfertigen Formkörpern von einer ersten Spritzstation zu einer zweiten Spritzstation. Hierbei werden an den verschiedenen Spritzstationen aus verschiedenen Spritzeinheiten verschiedene Kunststoffarten⌃und werden an mindestens einer Spritzstation unter Einsatz des Kernes verschiedene Kunststoffarten gespritzt

Die Erfindung schafft eine mit einem Zusatzaggregat versehene Spritzgußform, die auch Spritzgußwerkzeug genannt werden kann und die ein Verspritzen von mehreren verschiedenfarbigen Kunststoffen sowie verschiedenen Materialien auf jeder herkömmlichen einfarbigen Spritzgußmaschine zuläßt. Aufgrund der Erfindung lassen sich zwei bis acht oder mehr verschiedenfarbige Kunststoffe oder Materialien auf einer relativ kleinen Maschine in einem Arbeitsgang verspritzen.

Die Erfindung läßt es zu, einen Anguß als Rahmengebilde auszubilden, mit dem die erwünschten Formkörperteile, z. B. Tasten wie Schreibmaschinentasten, mit einem bestimmten Abstand durch dünne Stege gebildet fest verbunden (angespritzt) sind, wobei die Formkörperteile mit Symbolen in verschiedenen Farben versehen sind. Da die Abstände der Formkörperteile (Tasten) voneinander mit den Abständen der Öffnungen für die Tasten in den Gehäusen von Rechenmaschinen oder Schreibmaschinen abgestimmt sind, können diese bei der späteren Montage in das jeweilige Gehäuse durch Ausstanzen oder eine ähnliche Maßnahme komplett eingelegt werden. Das Rahmengebilde wird so ausgebildet, daß es magaziniert werden kann, um eine Automatisierung zu ermöglichen.

Bei der erfindungsgemäßen Spritzgußform lassen sich Formkörperteile, z.B. Tasten, mit verschiedenen Symbolen mit verschiedenen Farben oder Materialien direkt in das mitgespritzte Rahmengebilde bzw. "Gehäuse" einspritzen. Es lassen sich in Farbe und Material unterschiedliche Formkörperteile, z.B. Knöpfe, in das Rahmengebilde oder Gehäuse einspritzen, wobei jedes Formkörperteil aus verschiedenen Farben oder Materialien zusammengesetzt sein kann. Mittels der erfindungsgemäßen Spritzgußform lassen sich auf jeder bekannten einfachen Spritzgußmaschine verschiedene thermoplastische Artikel in verschiedenen Materialien und verschiedenen Farben in einem Arbeitsgang herstellen.

In der Zeichnung ist eine bevorzugte Ausführungsform der Erfindung dargestellt und zeigt

Fig. 1 eine Vorderansicht einer Spritzgußform zur Herstellung von Formkörpern aus mehreren Kunststoffarten,

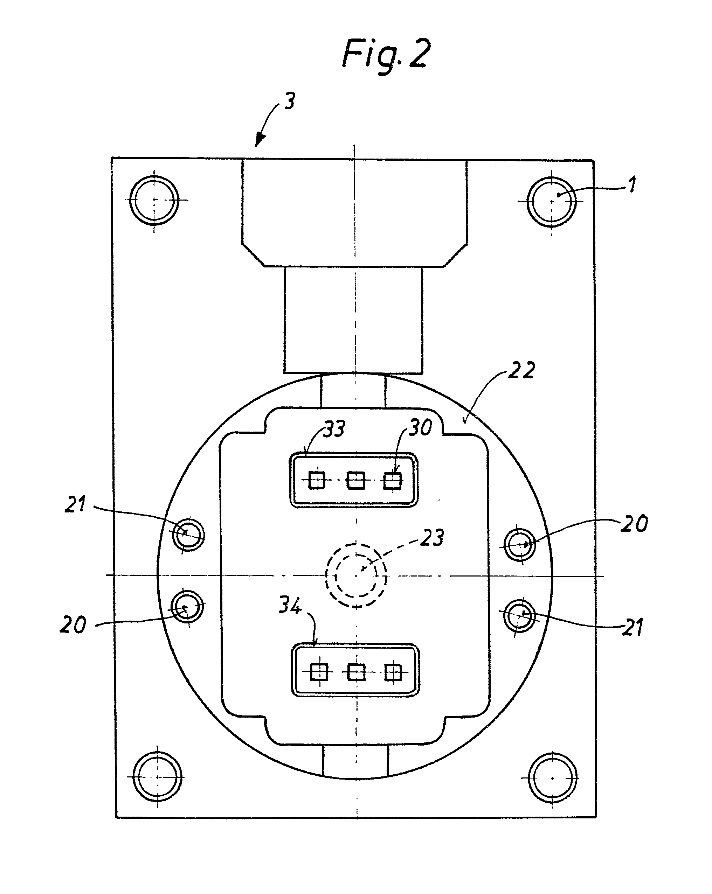

Fig. 2 eine Rückansicht der Spritzgußform gemäß Fig. 1,

Fig. 3 einen Schnitt gemäß Linie III-III in Fig. 1,

Fig. 4 einen Schnitt eines Kernes,

Fig. 5 schematisch eine Draufsicht auf den Kern gemäß Fig. 4 mit anschließenden Kanälen und

Fig. 6 eine Draufsicht auf einen weiteren Kern.

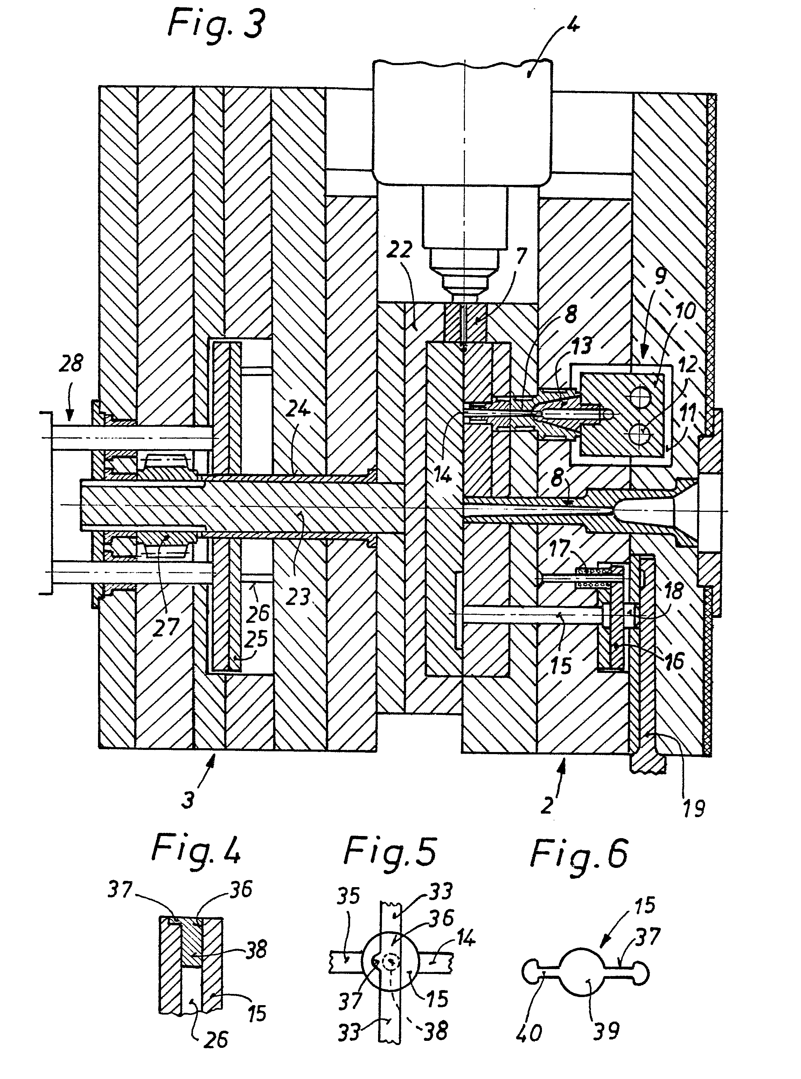

Zu der Spritzgußform gemäß Zeichnung gehören vier waagerecht verlaufende Führungssäulen 1, die ortsfest und im Rechteck angeordnet sind. Auf den Führungssäulen sitzt ortsfest ein Werkzeugoberteil 2 und auf den Säulen verschiebbar ein Werkzeugunterteil 3. Das Werkzeugoberteil 2 ist mit vier Spritzeinheiten 4, 5, 6 besetzt, von denen eine sich in Richtung der Führungssäulen erstreckend nicht näher gezeigt ist, die in an sich bekannter Weise aufgebaut sind und die jeweils in der Farbe oder einer sonstigen Eigenschaft verschiedenen Kunststoff liefern können. Die eine Spritzeinheit 4 liefert den Kunststoff über eine Angußleiste 7; zwei Spritzeinheiten 5, 6 liefern jeweils durch eine Angußbüchse 8. An die beiden Angußbüchsen 8 schließt sich jeweils eine Heizeinrichtung 9 an, die gemäß Fig. 3 einen Heizkanal 10 umfaßt, der von einem wärmeisolierenden Raum 11 umgeben ist und in dem elektrische Heizpatronen 12 sitzen. Es sind Heizkanaldüsen 13 vorgesehen. Das Kunststoffmaterial gelangt dann von Kanälen 14 in die Formhohlräume, wobei diese Kanäle 14 an der Vorderseite des Werkzeugoberteiles 2 verlaufen.

Das Werkzeugoberteil 2 nimmt Kerne 15 auf, von denen in
Fig. 3 einer gezeigt ist. Jeder Kern 15 ist mit seinem
hinteren Ende an einer Scheibe 16 befestigt, die in einer Höhlung des Werkzeugoberteiles verschiebbar geführt
ist. Die Scheibe 16 ist von einer Feder 17 beaufschlagt,
die bestrebt ist, die Scheibe und damit den Kern 15 in
Richtung der Führungssäulen 1 weg vom Werkzeugunterteil
3 zu schieben. Die Scheibe 16 trägt an der Rückseite einen Noppen 18, der an einem Steuerriegel 19 gleitet, der
an der dem Noppen zugewendeten Seite eine Ausnehmung
aufweist. Wenn durch Verschieben des Steuerriegels 19 die
Ausnehmung in die Verlängerung des Noppens 18 gelangt,
dann kann der Kern 15 zurückweichen. Das Werkzeugoberteil ist mit zwei Zentrierstiften 20 versehen, denen je
eine Buchse 21 des Werkzeugunterteiles zugeordnet ist, und
mit zwei Buchsen 21 versehen, denen jeweils ein Zentrier-
20 des Werkzeugunterteiles zugeordnet ist.

Das Werkzeugunterteil 3, das ebenso wie das Werkzeugoberteil 2 aus mehreren Werkzeugplatten zusammengesetzt ist,
besitzt einen Drehteller 22, der dem Werkzeugoberteil
zugewendet ist. Der Drehteller 22 sitzt an einer Welle
23, die in einer Buchse 24 drehbar ist, die im Rumpf des
Werkzeugunterteiles befestigt ist. Der Rumpf des Werkzeugunterteiles 3 nimmt in einer Höhlung eine Auswerfplatte 25 auf, die mehrere Auswerfer 26 trägt, von denen
nur zwei angedeutet sind. Die Welle 23 trägt ein Zahnrad 27, das mittels eines nicht gezeigten Antriebes hin- und herdrehbar ist Von der Auswerferplatte 25 ragen nach hinten Stangen weg, die einer Auswerfereinrichtung 28 zugehören und mittels eines nicht gezeigten Antriebes hin- und herverschiebbar sind. Es ist auch die Antriebseinrichtung nicht gezeigt, mittels welcher das Werkzeugunterteil auf den Führungssäulen 1 hin- und herschiebbar ist.

Das Werkzeugoberteil 2 bildet an der dem Werkzeugunterteil zugewendeten Seite Formhöhlungen 29, denen Formstükke 30 am Werkzeugunterteil zugeordnet sind, die bei geschlossener Form in die Formhöhlungen eintauchen und in den Formhöhlungen soviel Platz freilassen, wie mit Kunststoff gefüllt werden soll. Wie aus der Zeichnung zu erkennen ist, sind zwei Gruppen von Formhöhlungen vorgesehen. Der einen Gruppe 31 von Formhöhlungen sind zwei Spritzeinheiten 4, 6 zugeordnet und der anderen Gruppe 32 von Formhöhlungen sind die beiden anderen Spritzeinheiten 5 zugeordnet. In der Gruppe 31 von Formhöhlungen 29 werden sogenannte Vorspritzlinge hergestellt. Diese werden auf den Formstücken sitzend aus den Formhöhlungen 29 der ersten Gruppe 31 gezogen und durch Drehen des Drehtellers 22 hinunter zu den Formhöhlungen der zweiten Gruppe 32 gedreht, in denen dann der Fertigspritzling hergestellt wird.

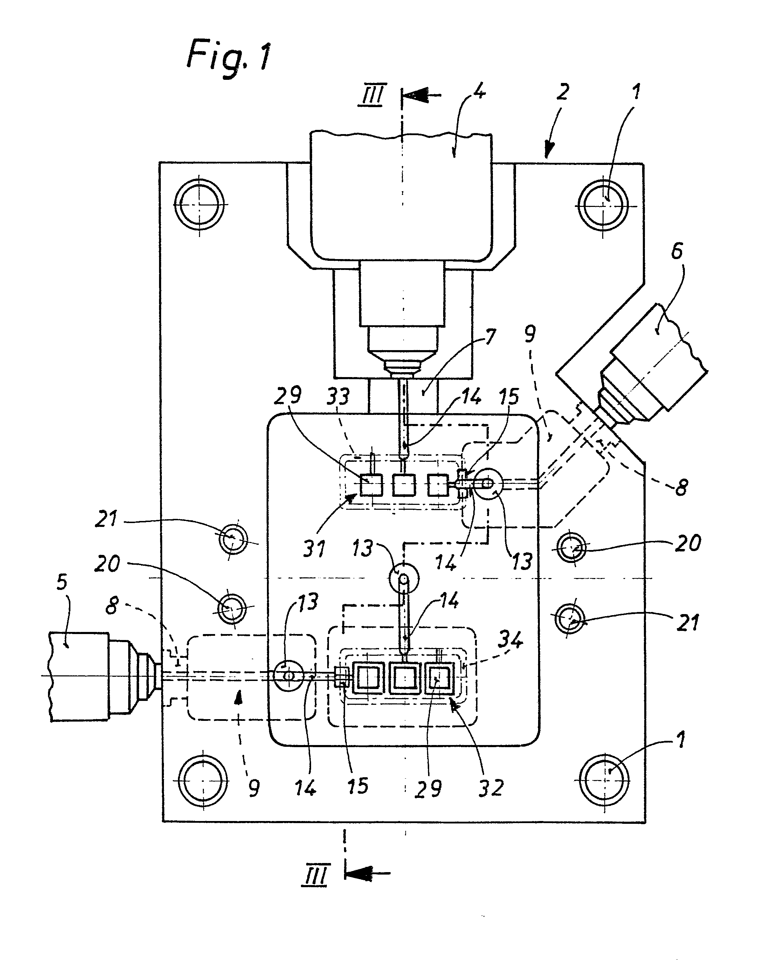

Bei geschlossener Form verläuft bei beiden Gruppen 31, 32 um die Formhöhlungen herum ein ringförmig geschlossener Kanal 33, 34, der bei der vorliegenden Ausführungsform im Werkzeugunterteil 3 eingearbeitet ist und in Fig. 1 strich-punktiert angedeutet ist und auch im Werkzeugoberteil vorgesehen sein kann. An den ringförmigen Kanal 33 der einen Gruppe sind über Stichkanäle die in Fig. 1 links gezeigten beiden Formhöhlungen 29 angeschlossen, die über die obere Spritzeinheit 4 gespeist werden. Die rechte Formhöhlung 29 ist ebenfalls über einen Stichkanal an den ringförmigen Kanal 33 angeschlossen, wird aber von der rechten Spritzeinheit 6 gespeist. Es ist ein verschiebbarer Kern 15 vorgesehen, der in Sperrstellung den Zugang vom ringförmigen Kanal 33 zur rechten Formhöhlung 29 sperrt, aber auch den Zugang von der rechten Spritzeinheit 6 in die rechte Formhöhlung sperrt. Bei einem ersten Spritzvorgang werden die beiden linken Formhöhlungen 29 und nahezu der gesamte Kanal 33 von der oberen Spritzeinheit 4 mit Kunststoff gefüllt. Danach wird der Kern 15 zurückgezogen, wodurch die rechte Formhöhlung aus der rechten Spritzeinheit 6 gefüllt wird und die Füllung des Kanales 33 vervollständigt wird. Der Kanal 33 und dessen Stichkanäle zu den Formhöhlungen bilden einen "Rahmen", der die Vorspritzlinge trägt, die in den Formhöhlungen 29 der ersten Gruppe 31 gebildet worden sind. Dieser Rahmen wird abgetrennt und ausgeworfen, nachdem die Vorspritzlinge die Formhöhlungen 29 der ersten Gruppe 31 verlassen haben und bevor sie in die Formhöhlungen der zweiten Gruppe eintauchen.

Der Kanal 34 rings um die Formhöhlungen 29 der zweiten Gruppe 32 ist mit den zwei rechten Formhöhlungen bzw. Kammern über Stichkanäle verbunden und wird von der nicht gezeigten zentralen Spritzeinheit gespeist. Die linke Spritzeinheit 5 ist an den Kanal 34 und die linke Formhöhlung angeschlossen, wobei aber ein Kern 15 die linke Formhöhlung vom Kanal und von der Spritzeinheit 5 abtrennt. Bei einem ersten Spritzvorgang, bei dem der Kern 15 absperrt, werden die beiden rechten Formhöhlungen 29, die zu diesen führenden Stichkanäle und der größte Teil des Kanales 34 aus der zentralen Spritzeinheit gefüllt. Sodann wird der Kern 15 zurückgezogen und werden die linke Formhöhlung sowie der zu dieser führende Stichkanal mit Kunststoff gefüllt und wird die Füllung des Kanales 34 aus der linken Spritzeinheit 5 vervollständigt. Es liegen nun drei Fertigspritzlinge vor, die durch ein Gitter zusammengehalten sind, das in dem Kanal 34 und in den Stichkanälen gebildet worden ist. Dieses Endprodukt, das aus den Fertigspritzlingen und dem Gitter bzw. Rahmenwerk besteht, wird ausgeworfen.

Wie Fig. 4 und 5 schematisch verdeutlichen, sperrt der Kern 15 einen Kanal 33 ab, d.h. er unterbricht an einer Stelle den Kanal, der zu anderen Formhöhlungen bzw. Kammern bzw. ausladenden Formhöhlungsbereichen führt. Weiterhin unterbricht der Kern 15 die Verbindung eines Stichkanales 35, der zu einem weiteren Formhohlraum führt, mit einem Kanal 14, der zu einer Spritzeinheit führt. Dabei füllt der Kern 15 auch einen Bereich des Kanales 33 und des Stichkanales 35 aus, die später zum gespritzten Produkt, z.B. zu einem Gitter des Produktes gehören.

Der Kern 15 ist auch so ausgebildet, daß das Material, das beim ersten Spritzvorgang in den Kanal 33 gelangt, sich mit dem Material hintergreifend bzw. ineinander greifend verbindet, das beim zweiten Spritzvorgang über den Kanal 14 in den vom Kern freigegebenen Bereich und den Stichkanal 35 gelangt. Und zwar weist der Kern 15 an seiner Stirnseite einen niedrigen Durchlaß 26 auf, der die vom Kern an sich getrennten Arme des Kanales 33 verbindet  Der Durchlaß bildet auch noch eine Ausbuchtung 37. Ausgehend von dem Durchlaß 36 besitzt der Kern 15 mittig eine Höhlung 38, die nach unten hin von einem Auswerfer 26 abgeschlossen ist. Der Durchlaß 36 samt Ausbuchtung 37 und die Höhlung 38 werden mit dem Kunststoff gefüllt, der über den Kanal 37 zufließt. Die im Durchlaß 37 und der Höhlung 38 entstehenden Bereiche werden nach Zurückziehung des Auswerfers 26 und des Kernes 15 in den Kunststoff eingebettet, der über den Kanal 14 zufließt.

Fig. 6 zeigt schematisch auch einen Kern 15, der nicht nur eine absperrende und raumaussparende Funktion hat, sondern aufgrund seiner Gestaltung eine Verankerung zweier verschiedener Kunststoffarten aneinander bewirkt. Der Kern 15 besitzt einen mittigen Bereich 39, der absperrt und Raum ausfüllt. Von diesem Kernbereich 39 sind seitliche Arme 40 getragen, die sich an den freien Enden verdicken. Es ist ersichtlich, daß Kunststoff, der den Kern 15 gemäß Fig. 6 umgibt, und Kunststoff, der den von diesem Kern ausgefüllten Raum später einnimmt, ineinandergreifen. Hierzu sind die Arme 40 beiderseits mit je einer Ausbuchtung 37 versehen.

Patentansprüche

1. Spritzgußform zur Herstellung von Formkörpern aus mindestens zwei Kunststoffarten, bei der an einen Formhohlraum zwei Spritzeinheiten angeschlossen sind und ein hin- und herverschiebbarer Kern in einer absperrenden Stellung einen Bereich des Formhohlraumes ausfüllt und einen ersten, der ersten Spritzeinheit zugeordneten Formhohlraumbereich sowie die Zutrittsöffnung der ersten Spritzeinheit in den Formhohlraum von einem zweiten, mit der zweiten Spritzeinheit verbundenen Formhohlraumbereich abtrennt, wobei zuerst der zweite Formhohlraumbereich aus der zweiten Spritzeinheit und dann nach Rückzug des Kernes der diesem zugeordnete Bereich des Formhohlraumes und der erste Formhohlraumbereich aus der ersten Spritzeinheit gefüllt wird und der Kern eine Ausnehmung bildet, dadurch gekennzeichnet, daß die Ausnehmung (37) in dem sperrenden Bereich des Kernes (15) vorgesehen ist und bei absperrender Stellung mit dem zweiten Formhohlraumbereich in Verbindung steht und die Zutrittsöffnung der ersten Spritzeinheit (6) in den Formhohlraum bei dem absperrenden Kern (15) liegt.

2. Spritzgußform nach Anspruch 1, dadurch gekennzeichnet, daß der Kern (15) in der absperrenden Stellung einen Gitterwerk-Kanal (14, 33), der zwei ausladende Fasson-Formhohlraumbereiche miteinander verbindet, unterbricht.

3. Spritzgußform nach Anspruch 1 oder 2, dadurch gekennzeichnet, daß der Kern (15) in der absperrenden Stellung einen Gitterwerk-Stichkanal (14), der zu einem
ausladenden Fasson-Formhohlraumbereich führt, abdeckt.

4. Spritzgußform nach Anspruch 1, 2 oder 3, dadurch gekennzeichnet, daß zwischen der ersten Spritzeinheit
(6) und deren Zutrittsöffnung in den Formhohlraum
eine Hei-zeinrichtung (9) vorgesehen ist.

5. Spritzgußform nach einem der vorhergehenden Ansprüche,
dadurch gekennzeichnet, daß die Richtung der Hin- und
Herverschiebung des Kernes (15) quer zur Einspritzrichtung der ersten Spritzeinheit (4) verläuft.

6. Spritzgußform nach einem der vorhergehenden Ansprüche,
dadurch gekennzeichnet, daß der Kern (15) in einem,
gegenüber einem hin- und herverschiebbaren Werkzeugteil (3) feststehenden Werkzeugteil (2) angeordnet ist.

7. Spritzgußform nach einem der vorhergehenden Ansprüche,
dadurch gekennzeichnet, daß der absperrende verschiebbare Kern (15) vorgesehen ist in Kombination mit einer Transporteinrichtung (22) zum Verbringen von teilfertigen Formkörpern von einer Spritzstation zu einer zweiten Spritzstation.

Fig. 1

## Fig.2

**Fig. 3**

**Fig. 4**

**Fig. 5**

**Fig. 6**